# EUROPÄISCHE PATENTANMELDUNG

(11) **EP 1 458 078 A1**
(43) Veröffentlichungstag der Anmeldung: **15.09.2004**
(21) Anmeldenummer: 04002870.6
(22) Anmeldetag: 10.02.2004
(51) Int. Cl.: H02K 5/22, H01R 43/16

(54) **Anordnung mit einem Elektromotor, und Verfahren zur Herstellung einer solchen Anordnung**

(30) Priorität: 15.02.2003 DE 10306389
(71) Anmelder: ebm-papst St. Georgen GmbH & Co. KG, 78112 St. Georgen (DE)
(72) Erfinder: Rapp, Nils, 78112 St. Georgen (DE); Winkler, Wolfgang Arno, 78112 St. Georgen (DE); Nickel-Jetter, Matthias, 78056 Villingen-Schwenningen (DE)

(57) **Zusammenfassung**

Elektromotoren und insbesondere Klein- oder Kleinstlüfter werden u.a. mit einem zweiten Teil, insbesondere einer Leiterplatte verbunden, um dort beispielsweise angeordnete Bauteile direkt zu kühlen. Dazu wird ein Elektromotor (22) verwendet, welcher mit mindestens einem ersten Teil (20) zur elektrischen Verbindung des Elektromotors (22) mit dem zweiten Teil (24) versehen ist. Dieses erste Teil (20) ist als Blechteil (20, 26) ausgebildet, in welchem Leiterbahnen (52, 54, 56) zur elektrischen Verbindung des Elektromotors (22) mit dem zweiten Teil (24) ausgebildet sind. Das erste Teil (20, 26) ist mindestens bereichsweise mit Kunststoff (32, 34) umspritzt ist, welcher an umspritzten Bereichen eine Isolation zwischen den Leiterbahnen (52, 54, 56) bildet. Das erste Teil (20, 26) weist Bereich (102, 106) zwischen zwei oder mehr benachbarten Leiterbahnen (52, 54, 56) auf, in welchen sowohl Teile des Blechteils als auch des umspritzten Teils entfernt sind, um die Leiterbahnen elektrisch voneinander zu trennen. Zur Herstellung einer solchen Anordnung wird bevorzugt ein Verfahren verwendet, bei welchem das Blechteil (20) zu einer Form gestanzt wird, welche seiner Endform annähernd entspricht und Leiterbahnen (52, 54, 56) zum elektrischen Anschluss des Lüfters (22) aufweist, die durch Brücken (100, 102, 104, 106) mechanisch und elektrisch verbunden sind. Das Blechteil wird mindestens bereichsweise mit Kunststoff (32, 34) umspritzt, wobei die Umspritzung auch mindestens einen Teil der Brücken (102, 106) einschließt. Die Brücken (100, 102, 104, 106) werden mechanisch entfernt, um die Leiterbahnen (52, 54, 56) elektrisch voneinander zu trennen.

## Beschreibung

Die Erfindung betrifft eine Anordnung mit einem Elektromotor, und ein Verfahren zur Herstellung einer solchen Anordnung.

Elektromotoren werden auch in Klein- oder Kleinstlüftern verwendet. Klein- oder Kleinstlüfter haben z.B. Außenabmessungen von 25 x 25 x 8 mm, 40 x 40 x 10 mm, 40 x 40 x 20 mm, oder von 60 x 60 x 15 mm, um nur einige Beispiele zu nennen. Ihr Gewicht liegt gewöhnlich zwischen 5 und 100 g, was es möglich macht, einen solchen Lüfter direkt auf einer Leiterplatte zu befestigen, um z.B. ein elektrisches Bauteil zu kühlen, welches auf dieser Leiterplatte angeordnet ist.

Für die Befestigung und den elektrischen Anschluss solcher kleinen Lüfter gibt es verschiedene Lösungen, die zum Teil recht aufwändig und kompliziert sind.

Es ist deshalb eine Aufgabe der Erfindung, einen neue Anordnung mit einem Elektromotor, und ein Verfahren zur Herstellung einer solchen Anordnung, bereit zu stellen.

Nach der Erfindung wird diese Aufgabe gelöst durch eine Anordnung gemäß Patentanspruch 1. Dadurch, dass das erste Teil als Blechteil ausgebildet ist, in welchem Leiterbahnen ausgebildet sind, kann eine solche Anordnung in sehr einfacher Weise mit einem zweiten Teil, insbesondere einer Leiterplatte verbunden werden, da das erste Teil auch zum elektrischen Anschluss dienen kann. Eine solche Anordnung hat den Vorteil, sehr preiswert und leicht zu sein, beides Forderungen, die in diesem Zusammenhang häufig gestellt werden.

Eine andere Lösung der gestellten Aufgabe ist Gegenstand des Patentanspruchs 13. Bei einem Klein- oder Kleinstlüfter stellt das erste Teil ein dual-purpose-Montageteil dar, das in einem Arbeitsgang die Montage eines kleinen Lüfters wie auch seinen elektrischen Anschluss an einem zweiten Teil ermöglicht. Dies kann beispielsweise durch eine mechanische Befestigung des Klein- oder Kleinstlüfters über das erste Teil auf einer Leiterplatte geschehen.

Eine weitere Lösung der gestellten Aufgabe ist Gegenstand des Patentanspruchs 14. Durch die erfindungsgemäßen Schritte erhält man ein elektrischen Verbindungsteil, welches eine vorgegebene Form haben kann und dabei günstig herzustellen ist.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:
- Fig. 1: eine Draufsicht auf ein bevorzugtes Ausführungsbeispiel eines erfindungsgemäßen Montageteils,
- Fig. 2: eine Seitenansicht, gesehen in Richtung der Linie II - II der Fig. 1
- Fig. 3: eine Seitenansicht, gesehen in Richtung des Pfeiles III der Fig. 1,
- Fig. 4: einen Schnitt, gesehen in Richtung der Linie IV-IV der Fig. 1,
- Fig. 5: einen Schnitt, gesehen in Richtung der Linie V-V der Fig. 1,
- Fig. 6: einen Schnitt, gesehen in Richtung der Linie VI-VI der Fig. 1,
- Fig. 7: eine Draufsicht auf ein zweites Ausführungsbeispiel eines erfindungsgemäßen Montageteils,
- Fig. 8: eine Seitenansicht, gesehen in Richtung des Pfeiles VIII der Fig. 7,
- Fig. 9: eine Seitenansicht, gesehen in Richtung des Pfeiles IX der Fig. 7 und
- Fig. 10: eine erfindungsgemäße Anordnung mit einem Kleinstlüfter, der mit erfindungsgemäßen Montageteilen versehen und auf einer Leiterplatte 24 montiert ist, in stark vergrößerter Darstellung,
- Fig. 11: einen Schnitt durch die Montageteile, wobei der untere Teil des Lüfters so weit angedeutet ist, wie das für das Verständnis der Erfindung notwendig erscheint.

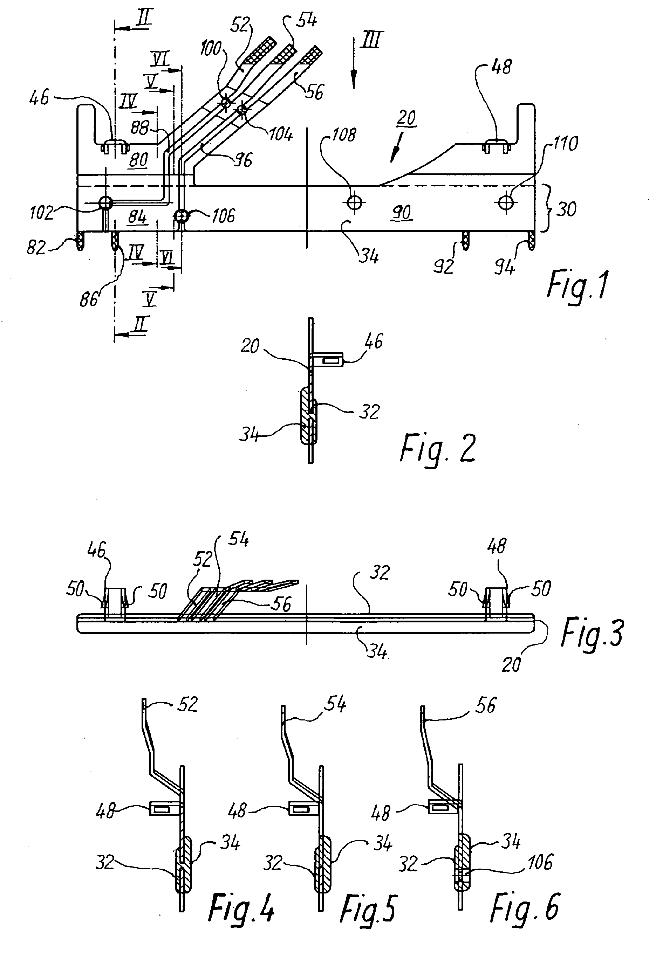

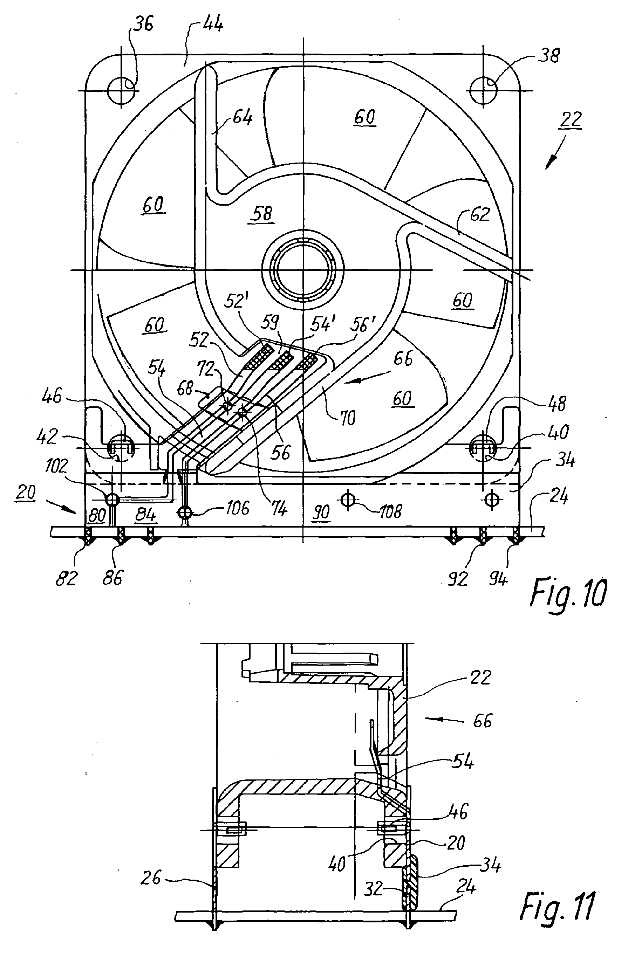

**Fig. 1** zeigt, etwa in doppelter Vergrößerung, also im Maßstab 2:1, eine erste Ausführungsform eines Montageblechs 20, das dazu dient, einen Klein- oder Kleinstlüfter 22 (vgl. Fig. 10) auf einer Leiterplatte 24 zu befestigen. Der Lüfter 22 hat hier einen etwa quadratischen Querschnitt, und das Montageblech 20 wird unten an ihm befestigt, sodass der Lüfter 22 auf dem Montageblech 22, das gleichzeitig zum elektrischen Anschluss dient, und einem Montageblech 26 (Fig. 11) steht. Beide Montagebleche 20, 26 haben kleine Füße bzw. Verbindungsteile, mittels deren sie in metallisierten Löchern der Leiterplatte 24 festgelötet werden, wie in Fig. 10 und 11 dargestellt.

Fig. 1 zeigt, dass das Montageblech 20 in der Draufsicht eine Umrissform hat, die etwas an ein altertümliches Bett erinnert. Es hat unten einen streifenförmigen Bereich 30. Fig. 1 zeigt die vom Lüfter 22 abgewandte Seite des Montageblechs 20, und dort befindet sich auf dem Streifen 30 eine Kunststoffbeschichtung 34. Auf der gegenüberliegenden Seite befindet sich eine Kunststoffbeschichtung 32. Das Montageblech 20 hat, wie Fig. 1 zeigt, verschiedene Ausnehmungen, und durch diese Ausnehmungen hindurch sind die Kunststoffbeschichtungen 32 und 34 miteinander verbunden. Wie aus Fig. 11 hervorgeht, dient die Beschichtung 32, 34 als eine Art Distanzelement zwischen der Leiterplatte 24 und der Unterseite des Lüfters 22.

Der Lüfter 22 hat vier Befestigungsausnehmungen 36, 38, 40, 42, die in einem aus Kunststoff hergestellten Lüftergehäuse 44 vorgesehen sind. Das Montageblech 20 hat hierzu korrespondierende Vorsprünge 46, 48, die jeweils mit Widerhaken 50 versehen sind. Wie in Fig. 10 dargestellt, werden die Vorsprünge 46, 48 in die hierzu korrespondierenden Ausnehmungen 42 bzw. 40 eingepresst und dort durch ihre Widerhaken 50 verankert. Die Vorsprünge 46, 48 sind einstückig mit dem Montageblech 20 und durch Biegen aus diesem hergestellt. Sie können, wie dargestellt, einen U-förmigen Querschnitt haben oder jede beliebige andere Querschnittsform, z. B. die Form eines Tannenbaums.

Wie Fig. 1 zeigt, sind an dem Montageblech 20 drei Stromleiter 52, 54 und 56 vorgesehen, welche eine Verbindung mit entsprechenden Anschlussstellen 52', 54', 56' in einem Ausschnitt einer Nabe 58 des Lüfters 22 dienen. An dieser Nabe 58 ist der Antriebsmotor 59 des Lüfters 22 befestigt, und dort befinden sich die genannten Anschlussstellen. Dieser Motor dient dazu, auf ihm befestigte Lüfterflügel 60 anzutreiben, wie das dem Fachmann bekannt ist. Die Nabe 58 ist durch schmale Stege 62, 64 und einen verbreiterten Steg 66 mit dem Lüftergehäuse 44 verbunden. Der Steg 66 dient als Auflage für elektrische Leiter, die den Motor 59 mit der Leiterplatte 24 verbinden. Der Steg 66 hat hierzu seitliche Begrenzungen 68, 70 und zwei vorspringende Stifte 72, 74, welche als Separatoren für diese Leiterbahnen dienen: Der Stift 72 trennt die Stromleiter 52 und 54, und der Stift 74 trennt die Stromleiter 54 und 56.

Wie dargestellt, gehen vom Montageblech 20 die drei Stromleiter 52, 54 und 56 baus. Ihre Form kann den **Fig. 4 bis 6** entnommen werden. Der Stromleiter 52 ist elektrisch mit einem in Fig. 1 linken Abschnitt 80 und einem damit einstückigen Verbindungsteil 82 verbunden, welch Letzteres zur Verbindung mit der Leiterplatte 24 dient.

Der Stromleiter 54 ist elektrisch mit einem Abschnitt 84 und einem dort vorgesehenen Verbindungsteil 86 verbunden. Der Abschnitt 84 befindet sich in Fig. 1 rechts vom Abschnitt 80 und ist von diesem durch eine herausgestanzte Trennlinie 88 getrennt.

Der Stromleiter 56 ist elektrisch mit einem Abschnitt 90 auf der in Fig. 1 rechten Seite und zwei dort vorgesehenen Verbindungsteilen 92, 94 verbunden. Er ist vom Abschnitt 84 durch eine herausgestanzte Trennlinie 96 verbunden.

Bei der Herstellung des Montageblechs 20 sind die Trennlinien 88 und 96 nicht durchgehend, sondern sie sind durch so genannte Brücken miteinander verbunden.

Die Trennlinie 88 ist durch eine erste Brücke 100 zwischen den oberen Abschnitten der Stromleiter 52, 54 und eine zweite Brücke 102 im Bereich der Kunststoffbeschichtungen 32, 34 verbunden.

Die Trennlinie 96 ist durch eine dritte Brücke 104 zwischen den oberen Abschnitten der Stromleiter 54, 56 und eine vierte Brücke 106 im Bereich der Kunststoffbeschichtungen 32, 34 verbunden.

Die Herstellung eines Montageblechs 20 läuft also wie folgt ab:
A) Das Montageblech 20 wird etwa in seiner in Fig. 1 dargestellten Form gestanzt, wobei aber die Brücken 100, 102, 104, 106 vorhanden sind, damit das Stanzteil in sich zusammenhängt.
B) Dieses Stanzteil wird mit der Kunststoffbeschichtung 32, 34 versehen, wie in den Fig. 1 bis 6 dargestellt. Diese Kunststoffbeschichtung durchdringt die Trennlinien 88, 96 sowie zwei hierfür vorgesehene Ausnehmungen 108, 110 auf der rechten Seite des Montageblechs 20 der Fig. 1 und verbindet dadurch alle Teile des Montageblechs 20 mechanisch miteinander.
C) Danach werden die vier Brücken 100, 102, 104, 106 durch runde Stanzungen entfernt. Die Stanzungen 102, 106 gehen dabei z. B. durch die Kunststoffschicht 34, dieses Blech 20 und die Kunststoffschicht 32, wie in Fig. 6 für die Stanzung 106 dargestellt.
D) Ggf. werden anschließend die Befestigungsteile 46, 48, die bereits gestanzt worden waren, in ihre endgültige Form gebogen, was in einem entsprechenden Werkzeug geschieht.
E) Die freien Enden der Leiterbahnen 52, 54, 56 und die Anschlussstifte 82, 86, 92, 94 zum Anschluss an die Leiterplatte 24 werden mir Reinzinn verzinnt, um eine gute Lötverbindung zu ermöglichen. Dies ist durch eine Kreuzschraffierung angedeutet.

Die Blechstärke des Teils 20 liegt bevorzugt in der Größenordnung von 0,5 mm, um ein sicheres Festlöten an der Leiterplatte 24 zu ermöglichen.

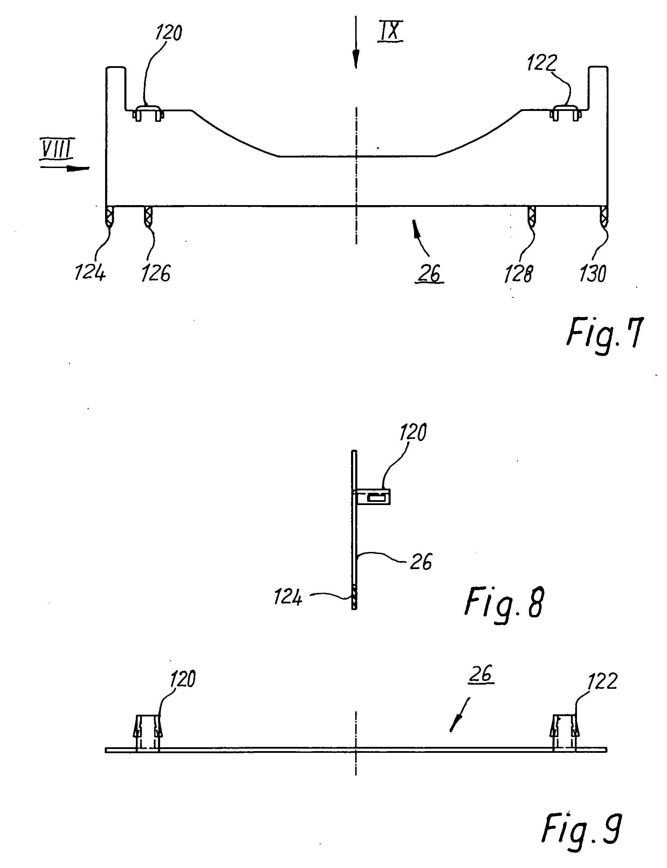

Die **Fig. 7 bis 9** zeigen das Montageblech 26, dessen Funktion sich aus Fig. 11 ergibt. Es entspricht in seiner Umrissform und Ausgestaltung weitgehend dem Montageblech 20 der Fig. 1 bis 6, aber ohne die Leiterbahnen 52 bis 56 und ohne die Kunststoffbeschichtungen 32 und 34. Es ist mit Befestigungsteilen 120, 122 versehen, welche mit den Befestigungsteilen 46, 48 der Fig. 1 bis 6 identisch sind. Diese werden gemäß Fig. 11 in dieselben Öffnungen 40, 42 eingepresst, aber an der Rückseite des Lüfters 22. Das Montageblech 26 hat unten Befestigungsstifte 124, 126, 128, 130, welche mit Reinzinn verzinnt sind und welche in entsprechende metallisierte Bohrungen der Leiterplatte 24 eingelötet werden.

Zur Montage geht man bevorzugt so vor, dass beim Hersteller des Lüfters 22 die Montagebleche 20, 26 am Lüfter 22 fertig montiert werden.

Diese vormontierten Lüfter 22 werden dann beim Kunden auf die vorbereitete Leiterplatte 24 an der gewünschten Stelle aufgesetzt, was mittels eines Bestückungsautomaten geschehen kann, und dann im Lötbad mit der Leiterplatte 24 verlötet. Hierdurch entfallen alle Verdrahtungsarbeiten mit Litzen oder dergleichen, und man kann solche Klein- oder Kleinstlüfter sehr preiswert auf einer Leiterplatte 24 bestücken.

Naturgemäß sind im Rahmen der vorliegenden Erfindung vielfache Abwandlungen und Modifikationen möglich. Sollen z. B. zu einem Lüfter mehr als drei Leitungen geführt werden, so kann man auch das Montageblech 26 mit entsprechenden Leiterbahnen versehen, die dann z. B. an der Außenseite des Lüftergehäuses 48 angeschlossen werden können. Jedoch stellt die dargestellte Ausführungsform das derzeit bekannte Optimum dar.

Wie aus den Fig. 4, 5, 6, 10 und 11 hervorgeht, werden die Stromleiter 52, 54, 56 an verschiedenen Stellen abgebogen, um eine optimale und funktionsgerechte Form zu erhalten. Diese Biegestellen sind abhängig von der Form des verwendeten Lüfters.

Die Stromleiter 52, 54, 56 können beispielsweise in bestimmten Bereichen kreisrund gebogen werden, um an diesen kreisrunden Bereichen einen rotationssymmetrischen Anschluss für eine elektrische Kontaktierung mit einem zweiten Teil 24 zu bieten.

## Patentansprüche

1. Anordnung mit einem Elektromotor (22), welcher Elektromotor (22) mit mindestens einem ersten Teil (20, 26) zu seiner elektrischen Verbindung mit einem zweiten Teil (24) versehen ist,
welches erste Teil als Blechteil (20, 26) ausgebildet ist, in welchem Leiterbahnen (52, 54, 56) zur elektrischen Verbindung des Elektromotors (22) mit dem zweiten Teil (24) ausgebildet sind,
welches erste Teil (20, 26) mindestens bereichsweise mit Kunststoff umspritzt ist, welcher an umspritzten Bereichen eine Isolation zwischen den Leiterbahnen (52, 54, 56) bildet,
und welches erste Teil (20, 26) Bereiche (102, 106) zwischen zwei oder mehr benachbarten Leiterbahnen (52, 54, 56) aufweist, in welchen sowohl Teile des Blechteils als auch des umspritzten Kunststoffs entfernt sind, um die Leiterbahnen (52, 54, 56) elektrisch voneinander zu trennen.

2. Anordnung nach Anspruch 1, bei welcher mindestens ein Teil der Leiterbahnen (52, 54, 56) des ersten Teils (20) mit einem Anschlussglied (82, 86, 92, 94) elektrisch verbunden ist, welches zum Festlöten an einer auf dem zweiten Teil (24) vorgesehenen metallisierten Stelle, insbesondere einer dort vorgesehenen Leiterbahn, ausgebildet ist.

3. Anordnung nach Anspruch 2, bei welcher das Anschlussglied (82, 86, 92, 94) aus der Kunststoffumspritzung (32, 34) heraus ragt.

4. Anordnung nach einem der vorhergehenden Ansprüche, bei welcher die Bereiche (102, 106) als Ausnehmungen ausgebildet sind.

5. Anordnung nach einem der vorhergehenden Ansprüche, bei welcher der Elektromotor (22) ein mindestens teilweise als Formstück aus Kunststoff ausgebildetes Gehäuse (44) aufweist, in welchem mindestens eine Befestigungsöffnung (40, 42) vorgesehen ist,
und das erste Teil (20, 26) mindestens einen Vorsprung (46, 48, 120, 122) aufweist, welcher in diese Befestigungsöffnung (40, 42) eingreift und eine Verbindung zwischen dem ersten Teil (20, 26) und dem Gehäuse (44) bildet.

6. Anordnung nach Anspruch 5, bei welcher der Vorsprung (46, 48, 120, 122) mit mindestens einem Widerhaken (50) versehen ist, welcher zur Verankerung im Werkstoff der Befestigungsöffnung (40, 42) ausgebildet ist.

7. Anordnung nach einem der vorhergehenden Ansprüche, bei welcher das erste Teil (20, 26) den Elektromotor (22) mit dem zweiten Teil (24) mechanisch verbindet.

8. Anordnung nach einem der vorhergehenden Ansprüche, bei welcher die Leiterbahnen (52, 54, 56) in dem ersten Teil durch Stanzen oder dergleichen ausgebildet sind.

9. Anordnung nach einem der vorhergehenden Ansprüche, bei welcher das erste Teil (20, 26) eine gekrümmte Form aufweist.

10. Anordnung nach Anspruch 9, bei welcher die Leiterbahnen (52, 54, 56) eine gekrümmte Form aufweisen.

11. Anordnung nach einem der vorhergehenden Ansprüche, bei welcher das zweite Teil (24) eine Leiterplatte (24) ist.

12. Anordnung nach einem der vorhergehenden Ansprüche, bei welcher der Elektromotor (22) in Antriebsverbindung mit einem Lüfter (22) steht.

13. Anordnung nach Anspruch 12, bei welcher der Lüfter (22) ein Klein- oder Kleinstlüfter ist.

14. Verfahren zur Herstellung einer Anordnung mit einem Elektromotor (22), welchem Elektromotor (22) ein Blechteil (20) zu seiner Montage und zu seinem elektrischen Anschluss zugeordnet ist,
welches Verfahren folgende Schritte aufweist:
Dem Blechteil (20) wird eine Form gegeben, welche seiner Endform annähernd entspricht und Leiterbahnen (52, 54, 56) zum elektrischen Anschluss des Elektromotors (22) aufweist, die durch Brücken (100, 102, 104, 106) mechanisch und elektrisch verbunden sind;
das Blechteil (20) wird mindestens bereichsweise mit Kunststoff (32, 34) umspritzt, wobei die Umspritzung bevorzugt auch mindestens einen Teil der Brücken (102, 106) einschließt;
die Brücken (100, 102, 104, 106) werden unterbrochen, um die Leiterbahnen (52, 54, 56) elektrisch voneinander zu trennen.

15. Verfahren nach Anspruch 14, bei welchem zum Unterbrechen mindestens eines Teils der Brücken (102, 106) das Blechteil (20) und die es bedeckende Kunststoffbeschichtung (32, 34) im Bereich der betreffenden Brücken durchstanzt werden.

16. Verfahren nach Anspruch 14 oder 15, bei welchem zum Unterbrechen der Brücken Ausnehmungen an den Stellen dieser Brücken (100, 102, 104, 106) eingestanzt werden.
